# EUROPEAN PATENT APPLICATION

(11) **EP 3 633 479 A1**
(43) Date of publication of application: **08.04.2020**
(21) Application number: 18806927.2
(22) Date of filing: 24.05.2018
(51) Int. Cl.: G05D 1/02, G09F 3/02, G01C 21/34, G06T 7/60, G06K 19/06, G09F 3/00

(54) **GROUND MARK FOR SPATIAL POSITIONING**

(30) Priority: 25.05.2017 CN 201710388847
(71) Applicant: Zhuineng Robotics (Shanghai) Co., Ltd., Shanghai 200333 (CN)
(72) Inventor: LIU, Zhe, Shanghai 201611 (CN)
(74) Representative: Durán-Corretjer, S.L.P.
(86) International application number: PCT/CN2018/088244
(87) International publication number: WO 2018/214941

(57) **Abstract**

A ground mark for spatial positioning comprises a core region and a peripheral auxiliary region surrounding the core region. Positioning marks (3) are disposed at edges of the core region, and peripheral guiding marks (2) are disposed in the peripheral auxiliary region pointing to the center of the core region. The ground mark for spatial positioning increases redundancy, such that the mark can be scanned even if the mark is incomplete or blocked, and when deviated from the normal identification range, peripheral guiding marks (2) can be scanned to facilitate locating the core region.

## Description

### Field

The invention relates to the technical field of "quick response" code (i.e., QR code), and specifically to a ground mark for spatial positioning which resists the damage thereof, has a large identification range, and can be identified by a camera to thereby correct the spatial position of a robot or other device.

### Background

At present the spatial positioning methods of the device such as warehouse robot are mainly classified as integral spatial positioning and global spatial positioning.
1. Integral spatial positioning: the current spatial position of the robot is obtained by accumulating the position moves of the robot per unit time. The known method is to observe the light stream through a camera, and determine the position by calculating the travelling distance of the wheel. This method is very simple, but the errors may be accumulated gradually over time, causing the positioning error.
2. Global spatial positioning: the spatial position of the robot is determined according to the position of an external mark and the distance calculated between the robot and the external mark. This method does not accumulate the errors, but the mark such as magnetic stripe may be worn because the robot walks thereon. The installation cost of the magnetic marker in combination with the RFID is high, thus it is inconvenient to reinstall them. A visual mark such as QR code can be used in the industrial scene.

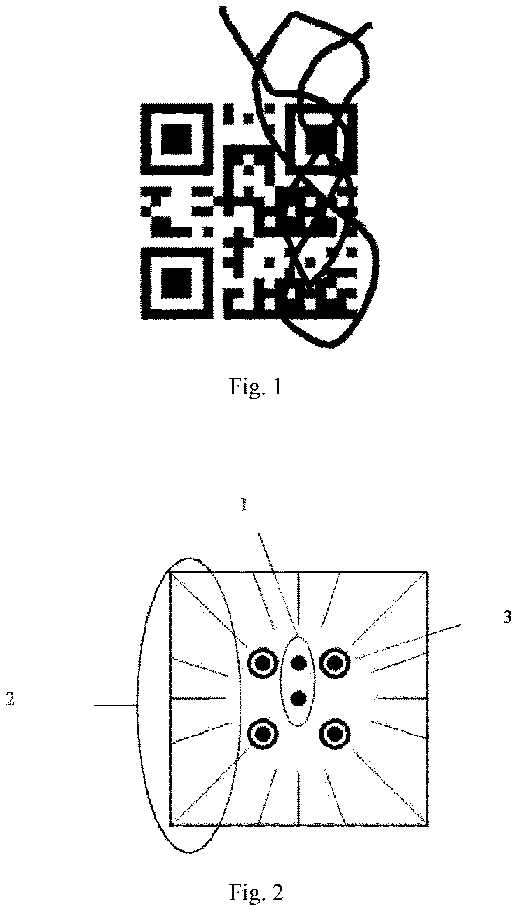

"QR" in the QR code is the abbreviation of Quick Response. Such kind of two-dimensional code can be read quickly. Compared with the previous bar code, the QR code can store richer information, including the encryption of the text, URL address and other types of data. The well-known method of using the visual mark has the following problems:
A. The visual mark as a whole needs to be observed by the camera to work as a mark. In the practical application, the visual mark is easy to be shielded or damaged so that the camera cannot read the intact visual mark. As shown in Fig. 1, when a part of the visual mark is shielded or damaged, the camera cannot identify this visual mark.
B. Once the camera deviates from the identification range of the visual mark, it cannot position the visual mark. This problem frequently occurs when the robot is switched between the manual control and automatic control, where the manual control cannot guide the robot to enter the identification range of the visual mark precisely.

### Summary

An objective of the invention is to overcome the deficiencies in the prior art, and to provide a ground mark for spatial positioning which resists the damage thereof and has a large identification range.

In order to achieve the above-mentioned objective, a ground mark for spatial positioning is provided, which includes a core region and a peripheral auxiliary region surrounding the core region. The core region is provided with positioning marks at edge positions of the core region. The peripheral auxiliary region is provided with peripheral guiding marks. The peripheral guiding mark has a parameter pointing to the center of the core region. Reading of the parameter by capturing the peripheral guiding mark can assist in finding the center of the core region.

In order to overcome the disadvantage that the camera cannot position the visual mark when the camera deviates from the identification range, the invention proposes a solution in which "the peripheral identification assists in the core identification". In the case that the camera deviates from the normal "core" identification range, the visual mark is positioned by the peripheral auxiliary region of the mark, to thereby guide the device to return into the core identification range of the visual mark. The identification range of the peripheral auxiliary region is relatively large and information in the peripheral auxiliary region is relatively weak.

The peripheral guiding mark is not limited to graph, number and pattern, but has the directivity, which means that it has the parameter pointing to the core region. The center of the core region can be found by capturing, interpreting and calculating the parameter, and the robot can then be given with an order.

In an embodiment, the peripheral guiding marks are a plurality of concentric circles. The circle center of the concentric circles is the center of the core region.

When the peripheral guiding mark is a circle, its directivity parameter is the circle center. The circle center is calculated by capturing the arc, which can assist in finding the center of the core region.

When the peripheral guiding marks are concentric circles, the camera gathers the arc information and delivers the arc information to the background computer, and the computer calculates the same normal direction of the concentric circles and commands the robot to move in the normal direction of the concentric circles, to thereby pinpoint the core region.

In another embodiment, the peripheral guiding marks are a plurality of lines. The lines intersect at the center of the core region.

When the peripheral guiding mark is a line, its directivity parameter is the point of intersection of the lines. The point of intersection of the lines is calculated by capturing the adjacent lines, which can assist in finding the center of the core region.

The capturing of the camera, the calculation method of the background program and the operation process can be completed in any known way.

When the peripheral guiding mark is the line, the camera gathers the information of the adjacent lines and delivers the line information to the background computer, and the computer calculates the point of intersection after the lines extend and commands the robot to move in the direction of the point of intersection of the lines, to thereby pinpoint the core region.

Furthermore, the directivity parameter can be recorded in the database in advance and obtained by capturing and matching a piece of data.

In another embodiment, the peripheral guiding marks are gradient colors. The part of area at the same distance from the center of the core region has the same color.

The processes such as capturing and gathering of the camera, data matching and directivity calculation are also the well-known means of those skilled in the art.

The core region can also be pinpointed by calculating the chromatic aberration gradient vectors generated by the gradient colors and calculating the point of intersection of the extending lines of the gradient vectors.

In order to overcome the disadvantage that the camera cannot position the visual mark when the camera deviates from the identification range, the invention proposes a solution in which "the peripheral identification assists in the core identification". In the case that the camera deviates from the normal "core" identification range, the visual mark is positioned by the peripheral auxiliary region of the mark of which the identification range is relatively large and in which the information is relatively weak, to thereby guide the device to return into the core identification range of the visual mark.

Preferably, the core region is provided with at least four positioning marks at the edge positions, and the positioning marks are uniformly distributed on the periphery at a same distance from the center position of the core region.

The positioning marks designed in the invention are redundant, and the number of the positioning marks is greater than 3 but not limited to 4. The positioning marks are not limited to concentric circles or concentric squares. Here, the concentric circles contain the direction and position information, and the camera only needs to capture any three of the positioning marks (i.e., any three groups of concentric circles) to complete the accurate positioning.

Preferably, the core region is provided with four positioning marks at the edge positions, and the four marks are located at four corners of the core region.

Preferably, the positioning mark each is a group of concentric circles or a group of concentric squares.

Preferably, the central part of the core region is provided with an information mark.

When the invention is applied for the robot positioning, visual marks are arranged at an interval of fixed distance on the ground in the space where the device such as robot works. In the arrangement process, the extending line of the ground mark (visual mark) is compared and aligned with a ground reference, to reduce the errors produced in the arrangement process. When the system programs the moving path of the device such as robot, the system makes the device such as robot pass through the visual marks on the path and utilize the camera thereon to capture the visual marks. When the device such as robot does not reach the identification range of the visual mark, it calculates the spatial position by the integral spatial positioning. After the visual mark is captured by the camera, the angle and position of the robot with respect to the mark are calculated, and the global positioning information is then obtained according to the angle and position of the robot with respect to the mark in combination with the spatial position of the mark. The information on the visual mark is redundant, thus even if the visual mark is incomplete or shielded out of the view of the camera, the identification function can also be achieved as long as a part of the mark is captured, to thereby complete the global positioning calibration. The peripheral guiding mark pointing to the center is drawn around each ground mark. In the case that the camera deviates from the normal identification range, by capturing the peripheral guiding mark, the device such as robot is guided to return into the identification range of the visual mark according to the calculation of the parameter relevant to the peripheral guiding mark. When switching from the manual operation to the automatic operation, the worker only needs to manually control the robot to reach the peripheral identification region with the larger identification range, and then the robot can find the core identification region of the visual identification code by itself.

The invention has the following beneficial effects: 1) the information on the visual mark is redundant, and even if the information loss is caused by some degree of damage, shield or the like, the identification function can be achieved as long as a part of the mark can be captured, to thereby complete the global positioning calibration; 2) the extending line is printed on the ground mark and can be compared and aligned with the reference on the ground, to reduce the errors produced in the mark arrangement; 3) some lines pointing to the center are drawn around each ground mark. In the case that the camera deviates from the normal identification range, by capturing the lines in the peripheral auxiliary region, the device such as robot is guided to return into the identification range of the visual mark according to the intersection direction of the lines, to overcome the disadvantage that the camera cannot position the visual mark when the camera deviates from the identification range, and enhance the error correcting capability and stability of the system.

It should be understood that each technical feature of the invention described above and each technical feature described specifically in the following (e.g., embodiments) can be combined with each other in the scope of the invention, to thereby constitute the new or preferred technical solutions. Due to the limited space, the detailed description thereof will be omitted here.

### Brief Description of the Drawings

Fig. 1 is a schematic diagram of the information loss of the visual mark in the prior art;
Fig. 2 is a schematic diagram of an embodiment of the invention;
Fig. 3 is a schematic diagram when a part of the ground mark of the invention is stained;
Fig. 4A is a schematic diagram of the arrangement error of the traditional ground mark;
Fig. 4B is a schematic diagram of the arrangement error of the ground mark of the invention;
Fig. 5 is the running route of the robot;
Fig. 6 is a schematic diagram of auxiliary positioning of camera;
Fig. 7 is a schematic diagram of another embodiment of the invention;
Fig. 8 is a schematic diagram of yet another embodiment of the invention.

| | | |
|---|---|---|
| 1 - Information mark | 2 - Positioning mark | 3 - Peripheral guiding mark |

### Detailed Description

The QR code is the common mark for positioning and data collection, and the QR code has the information range occupying the smaller area and is convenient to be collected by the camera. But for the QR code mark in the warehouse management process, since the place is relatively large and the distribution spacing between the QR code marks is relatively large, it may be difficult to position the QR code precisely when the robot control process may deviate. However, in the case of inaccurate positioning, the information identification of the QR code will be wrong. The invention aims at designing a mark which is positioned accurately, in consideration of the QR codes with the larger discrete distribution spacings in the warehouse.

In order to overcome the disadvantage that the camera cannot position the visual mark when the camera deviates from the identification range, the invention proposes a solution in which "the peripheral identification assists in the core identification". In the case that the camera deviates from the normal "core" identification range, the visual mark is positioned by the peripheral auxiliary region of the mark of which the identification range is relatively large and in which the information is relatively weak, to thereby guide the device to return into the core identification range of the visual mark. The mark of the peripheral auxiliary region is graph, pattern, color or the like.

In order to overcome the disadvantage that the visual mark is easy to be shielded and worn and the intact visual mark must be identified, the invention proposes an identification method of partially identifying the visual mark, and designs the corresponding visual mark. Particularly the camera only needs to identify a part of the visual mark to complete the identification function.

For the traditional QR code, the QR code itself must be captured to implement the positioning. The inventive solution uses the lines, concentric circles, colors or others to assist and cooperate with the ground mark to position, that is, when the capturing device captures the mark, it uses the positioning module on the mark to position; if the capturing device does not capture the mark, it uses the lines, concentric circles, gradient colors or others to assist in obtaining the relative positions of the ground mark and the current device position and guiding the robot device to move towards the ground mark direction until the device captures the QR code.

### First embodiment

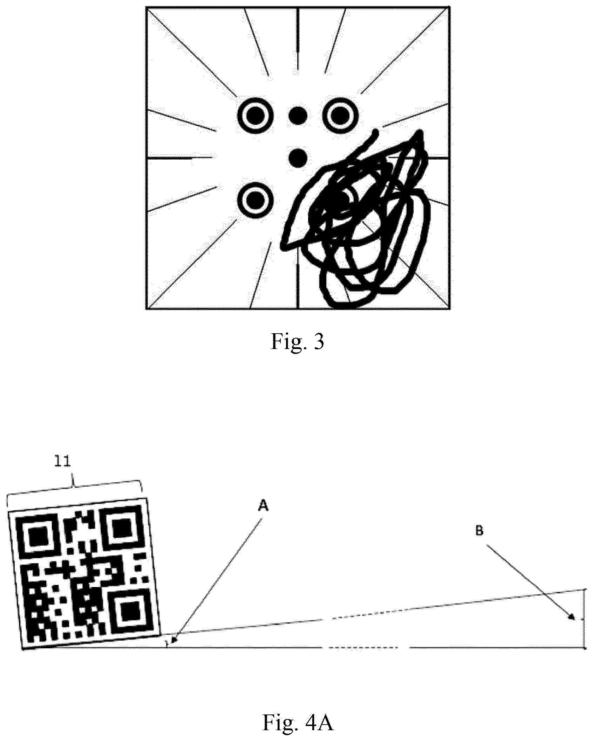

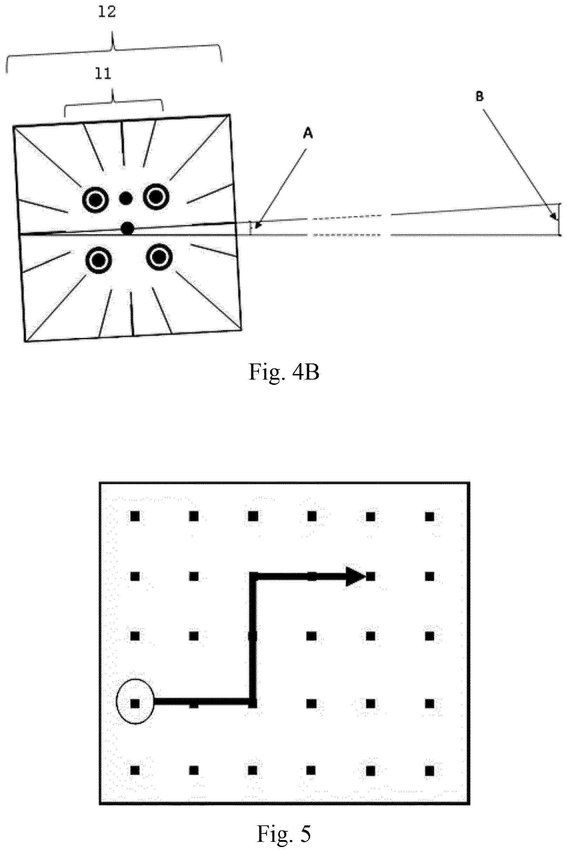

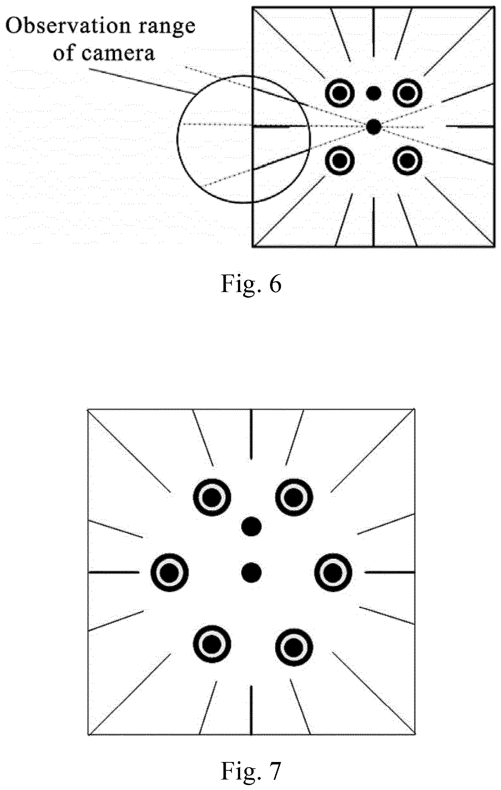

A ground mark for spatial positioning as shown in Fig. 2 includes a core region and a peripheral auxiliary region surrounding the core region. The core region is provided with positioning marks 3 at the edge positions and has an information mark 1 at the central portion. The peripheral auxiliary region is provided with peripheral guiding marks 2 which are equiangular distributed lines intersecting at the center of the core region. The lines can intersect at the center of the core region at one end, or the extending of the lines can intersect at the center of the core region. Some lines pointing to the center are drawn around respective ground mark pattern as peripheral guiding marks in the peripheral auxiliary region. In the case that the camera deviates from the normal identification range, the device such as robot can be guided to return into the core identification range of the visual mark according to the intersection direction of the lines as long as the camera captures the lines. When the peripheral guiding marks are the lines, the camera gathers the information of the adjacent lines and delivers the line information to the background computer, and the computer calculates the point of intersection after the lines extend and commands the robot to move in the direction of the point of intersection of the lines, to thereby pinpoint the core region. The core region is provided with four positioning marks at the edge positions, the four positioning marks are located at four corners of the core region, and four positioning marks enclose the core region to become a square of which the side length 11 is 40 mm. The positioning mark is concentric circles, as shown in Fig. 3. Even if the ground mark is stained as shown in Fig. 1 to cause the information loss, the camera only needs to capture any three of the positioning marks to complete the accurate positioning and obtain the direction and position information to complete the positioning. However, the traditional QR code requires all three positioning modules to be complete without damage, and the positioning can be implemented only after the capturing device has captured all the three modules. The redundant positioning module is added in the inventive solution, and the capturing device only needs to capture any three of the positioning modules to implement the positioning. The capturing process is the same as the traditional capturing process. The screening is done in the background calculation procedure, where the positioning is completed as long as three pieces of positioning information are screened. As shown in Fig.4B, extending lines are printed around the ground mark which has the range 12 of at least 100 mm. For the marks with the same size, after the extending lines are added at the outer races, the positioning errors may be significantly reduced when the marks are arranged. In the traditional solution, the alignment relies on the QR code itself in the arrangement. In the inventive solution, the alignment relies on the extending line at the outer race in the arrangement. In the case that the arrangement errors are the same, i.e., A is 1 mm both in Figs. 4A and 4B, the inventive solution can reduce the actual deviation, which is specifically embodied in the fact that B is 25 mm in Fig.4A and B is 10 mm in Fig.4B. Fig. 5 is the running path of a robot, where the circle represents the robot and the arrow represents the running path of the robot. The visual marks are arranged on the ground in advance. The robot walks along the running path. Whenever one visual mark enters the field of view of the camera, the robot performs the global spatial positioning once to correct its position. As shown in Fig. 6, when the robot or device deviates from the core identification range, the peripheral identification method can be enabled, where the orientation of the core identification range is determined through the extending of the lines to continue completing the identification function.

### Second embodiment

Another embodiment as shown in Fig. 7 is the same as the first embodiment except that the ground mark is provided with six positioning marks 3, where the positioning marks are uniformly distributed on the periphery at a same distance from the center position of the core region, and the six positioning marks 3 enclose the core region to become a circular region. The six positioning marks 3 are captured and identified by the camera, and the positioning is completed as long as the comparisons of three positioning marks are completed successfully.

### Third embodiment

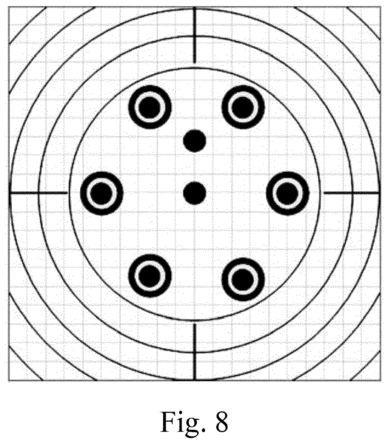

Another embodiment as shown in Fig. 8 is the same as the second embodiment except that the peripheral guiding marks 2 are the uniformly-distributed concentric circles of which the circle center is the center of the core region. When the peripheral guiding marks are the concentric circles, the camera gathers the arc information and delivers the arc information to the background computer, and the computer calculates the same normal direction of the concentric circles and commands the robot to move in the normal direction of the concentric circles, to thereby pinpoint the core region.

### Fourth embodiment

In another embodiment, the features are the same as those in the first embodiment except that the peripheral guiding marks are gradient colors where the parts at the same distance from the center of the core region have the same color. The processes such as capturing and gathering of the camera, data matching and directivity calculation are also the well-known means of those skilled in the art. The core region can also be pinpointed by calculating the chromatic aberration gradient vectors generated by the gradient colors and calculating the point of intersection of the extending lines of the gradient vectors.

## Claims

1. A ground mark for spatial positioning, comprising:
a core region; and
a peripheral auxiliary region surrounding the core region;
wherein the core region is provided with positioning marks at edge positions of the core region; and
the peripheral auxiliary region is provided with peripheral guiding marks; wherein each one of the peripheral guiding marks has a parameter pointing to a center of the core region, and reading of the parameter by capturing the one peripheral guiding mark assists in finding the center of the core region.

2. The ground mark for spatial positioning according to claim 1, wherein the peripheral guiding marks are a plurality of concentric circles; a circle center of the concentric circles is the center of the core region; and the parameter is pointing to the circle center of the concentric circles.

3. The ground mark for spatial positioning according to claim 1, wherein the peripheral guiding marks are a plurality of lines; the lines intersect at the center of the core region; and the parameter is pointing to a point of intersection of the plurality of lines.

4. The ground mark for spatial positioning according to claim 1, wherein the peripheral guiding marks are gradient colors; a part of the peripheral guiding marks at a same distance from the center of the core region has a same color, and the parameter is pointing to the center of the gradient colors.

5. The ground mark for spatial positioning according to any one of claims 1 to 4, wherein the core region is provided with at least four positioning marks at the edge positions of the core region, and the positioning marks are uniformly distributed on a periphery at a same distance from the center of the core region.

6. The ground mark for spatial positioning according to claim 5, wherein the core region is provided with four positioning marks at the edge positions of the core region, and the four positioning marks are located at four corners of the core region.

7. The ground mark for spatial positioning according to claim 6, wherein the positioning mark is a group of concentric circles or a group of concentric squares.

8. The ground mark for spatial positioning according to any one of claims 1 to 4, wherein a central part of the core region is provided with an information mark.

9. A method for spatial positioning, comprising:
performing the spatial positioning by using the ground mark according to any one of claims 1 to 8.

10. The method for spatial positioning according to claim 9, further comprising:
positioning a robot through integral spatial positioning when a camera of the robot does not capture the ground mark;
positioning the robot through global spatial positioning using the ground mark when the camera of the robot captures the ground mark.
